# EUROPEAN PATENT SPECIFICATION

(11) **EP 4 296 682 B1**
(45) Date of publication and mention of the grant of the patent: **18.02.2026**
(21) Application number: 21926723.4
(22) Date of filing: 19.11.2021
(51) Int. Cl.: G01N 35/00, G01N 35/04, G01N 35/10, G01N 35/02

(54) **AUTOMATIC ANALYSIS DEVICE AND METHOD FOR CONTROLLING AUTOMATIC ANALYSIS DEVICE**
AUTOMATISCHE ANALYSEVORRICHTUNG UND VERFAHREN ZUR STEUERUNG DER AUTOMATISCHEN ANALYSEVORRICHTUNG
DISPOSITIF D'ANALYSE AUTOMATIQUE ET PROCÉDÉ DE COMMANDE DE DISPOSITIF D'ANALYSE AUTOMATIQUE

(30) Priority: 17.02.2021 JP 2021023625
(43) Date of publication of application: 27.12.2023
(73) Proprietor: HITACHI HIGH-TECH CORPORATION, Tokyo 105-6409 (JP)
(72) Inventor: NISHIMURA Hitomi, Tokyo 105-6409 (JP); UMEKI Hiroya, Tokyo 105-6409 (JP); TAKAKURA Tatsuki, Tokyo 105-6409 (JP)
(74) Representative: Strehl & Partner mbB
(86) International application number: PCT/JP2021/042688
(87) International publication number: WO 2022/176295

(56) References cited:
- JP-A- 2009 270 940
- JP-A- 2009 281 752
- JP-A- 2013 174 550
- JP-A- 2013 185 975
- JP-A- 2014 098 618
- JP-A- H0 835 970
- JP-A- H08 110 342

## Description

### Technical Field

The present invention relates to an automatic analyzer that executes qualitative and quantitative analysis of a component in a biological sample such as blood and urine.

### Background Art

As an example of an automatic analyzer in which an operator can add a sample at any time, a period of time taken to output a result can be reduced, and miniaturization can be implemented at a low price, PTL 1 describes an automatic analyzer in which when sample addition is requested, whether a vacant position is present in general and emergency sample installation areas on inner and outer sample installation disks is determined, when the vacant position is not present, an alarm is output, when the vacant position is present, whether a vacant disk is in the process of a sample dispensing operation is determined, when the vacant disk is in the process of the sample dispensing operation, the content is displayed, when the vacant disk is not in the process of the sample dispensing operation, the vacant disk is rotated such that the vacant position is moved to a position where a sample can be easily added, when an emergency sample is not present at the time of restart of analysis, a reset operation of the disk to which the sample is added is executed, and when an emergency sample is present at the time of restart of analysis, the emergency sample is preferentially dispensed to continue the analysis by interrupting a sample analysis schedule.

### Citation List

### Patent Literature

PTL 1: JP2013-134140A
JP H08 35970 A discloses an automatic analyzer for analyzing patient samples and emergency samples while observing regular quality control intervals. Similar analyzers, also related to the one of the present invention, are disclosed in JP 2013 185975 A, JP 2013 174550 A, JP 2014 098 618 and JPH 08 35 970A.

### Summary of Invention

### Technical Problem

The automatic analyzer refers to an apparatus that causes blood or other biological samples to react with an analytical reagent that is specifically reactive with a component to be measured in the sample and detects a complex produced by this reaction using a spectroscopic method such as electrochemiluminescence. The automatic analyzer automatically executes all the operations from the detection of the component to be measured to output of the result.

The automatic analyzer is one apparatus that is required to execute efficient analysis in an inspection center that take on an inspection or a test of a sample for a hospital or a clinic or other medical research facilities.

In the automatic analyzer, in many cases, sample disposed on a sample disk are dispensed in ascending order of installation positions from a sample designated by an operator or according to a priority determined for each of various samples.

On the other hand, PTL 1 describes that, when a general sample, an emergency sample, a quality control sample, and a standard solution installed on a sample disk are analyzed, the emergency sample is preferentially dispensed and analyzed, and the result thereof is output.

However, in the automatic analyzer described in PTL 1, there is a given constraint to the dispensing order of various samples, and the priorities of dispensing of the general sample, the emergency sample, the quality control sample, and the standard solution cannot be changed. Therefore, a period of time taken to output the analysis result increases depending on circumstances, and it was clarified that there is room for further improvement in order to cope with more various operational environments.

For example, when the dispensing priority is set to "standard solution → emergency sample → quality control sample → general sample", and the standard solution and the emergency sample are measured at the same time, dispensing is executed in order of "standard solution → emergency sample". Accordingly, for example, "when it is desired to measure the emergency sample with the highest priority", there is a problem in that it is difficult to respond to the request.

In addition, there is a problem in that it is difficult to respond to, for example, a request "when the emergency sample is measured, it is desired to determine the analysis result in consideration of the quality control state by measuring the quality control sample at the same time immediately before the measurement of the emergency sample".

Further, when the dispensing priority is set to "emergency sample → standard solution → quality control sample → general sample" and a calibration curve of an analysis item for which the emergency sample is requested is not valid, the analysis of the emergency sample is not executed, an operator waits for obtaining a valid calibration curve, and thus there is a problem in that the waiting time increases.

The present invention has been made in order to solve the problems, and an object thereof is to provide an automatic analyzer and a control method of the automatic analyzer capable of coping with various operational environments.

### Solution to Problem

The present invention suggests the automatic analyzer and the control method for the automatic analyzer defined in the independent claims. Further advantageous features are set out in the dependent claims.

### Advantageous Effects of Invention

According to the present invention, it is possible to cope with various operational environments. Objects, configurations, and effects other than those described above will be clarified by describing the following embodiment.

### Brief Description of Drawings

FIG. 1 is a schematic diagram of an automatic analyzer according to an embodiment of the invention.
FIG. 2 is a schematic diagram of a sample disk in the automatic analyzer according to the embodiment.
FIG. 3 is a schematic diagram of the sample disk in which use of some positions are determined in the automatic analyzer according to the embodiment.
FIG. 4 is a flowchart from a setting of a dispensing condition to output of an analysis result in the automatic analyzer according to the embodiment.
FIG. 5 is a priority setting screen in the automatic analyzer according to the embodiment.
FIG. 6 is a schematic diagram of the sample disk in which samples are installed in the automatic analyzer according to the embodiment.
FIG. 7 is a schematic diagram showing a state in which priority numbers are allocated to the samples in the automatic analyzer according to the embodiment.
FIG. 8 is a schematic diagram showing a dispensing order of the samples in the automatic analyzer according to the embodiment.
FIG. 9 is a mode setting screen of the dispensing order in the automatic analyzer according to the embodiment.
FIG. 10 is a flowchart for determining options to be displayed on the mode setting screen in the automatic analyzer according to the embodiment.
FIG. 11 is a schematic diagram showing the state in which the priority numbers are allocated to the samples in the automatic analyzer according to the embodiment.
FIG. 12 shows a dispensing priority when selecting a mode I in the automatic analyzer according to the embodiment.
FIG. 13 shows the dispensing priority when selecting a mode II in the automatic analyzer according to the embodiment.
FIG. 14 shows the dispensing priority when selecting a mode III in the automatic analyzer according to the embodiment.
FIG. 15 is a block diagram of dispensing order determination in the automatic analyzer according to the embodiment.
FIG. 16 is a flowchart of the dispensing order determination in the automatic analyzer according to the embodiment.
FIG. 17 is a pattern table of the dispensing order determined by the flowchart in FIG. 16 in the automatic analyzer according to the embodiment.

### Description of Embodiments

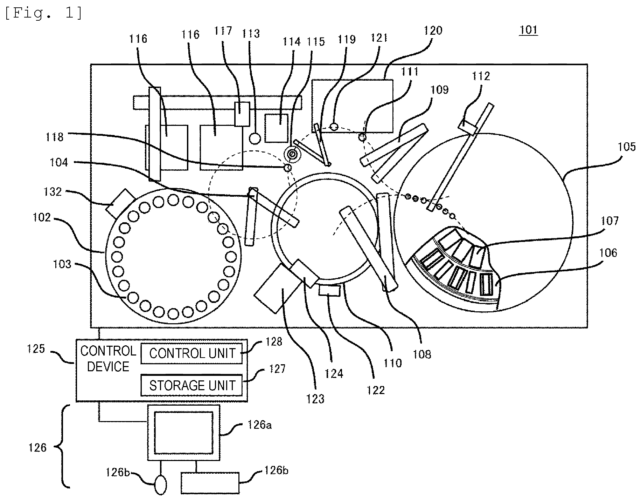

An embodiment of an automatic analyzer and a control method of the automatic analyzer of the present invention will be described using FIGS. 1 to 17. In the drawings used in the present specification, the same or corresponding components are represented by the same or similar reference numerals, and the description of these components will not be repeated.

First, an overall configuration of the automatic analyzer will be described using FIG. 1. FIG. 1 is an example of a configuration diagram illustrating the automatic analyzer according to the present invention.

In FIG. 1, an automatic analyzer 101 is an apparatus for analyzing a sample using a reagent corresponding to a predetermined analysis item and includes, for example, a sample disk 102, a sample dispensing mechanism 104, a reagent storage 105, reagent dispensing mechanisms 108 and 109, an incubator disk 110, a magnetic particle stirring arm 112, a first reaction vessel transport unit 117, a reaction vessel disposal hole 113, an incubator block 114, a reaction liquid stirring unit 115, a reaction vessel tray 116, a second reaction vessel transport unit 119, an immunodetection unit 120, a stirring unit 122, a biochemical detection unit 123, a reaction cell cleaning mechanism 124, a control device 125, and an operation unit 126.

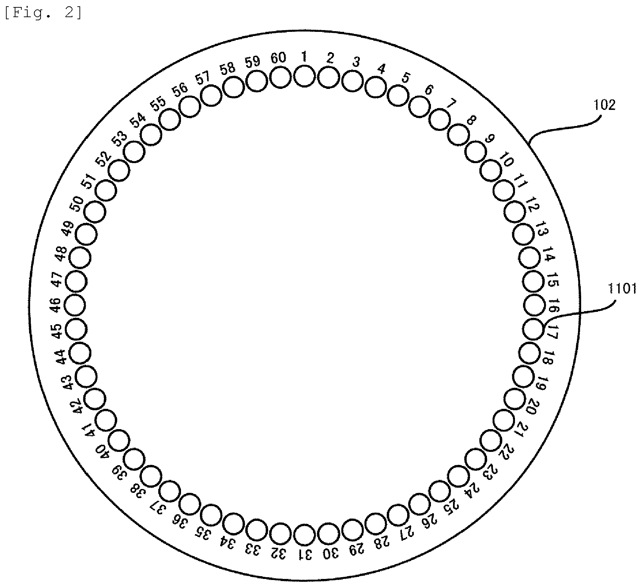

FIG. 2 illustrates an example of the sample disk 102. As illustrated in FIG. 2, the sample disk 102 has a structure in which a plurality of sample container 103 can be installed in a circumferential direction, and can be installed at any position 1101 regardless of the type of a sample.

The dispensing order of various samples installed on the sample disk 102 is determined depending on dispensing conditions, and by rotating the sample disk 102 clockwise and counterclockwise regardless of the order in which the sample container 103 are installed on the sample disk 102, each of the sample containers 103 is transported to an access position of the sample dispensing mechanism 104 during sample dispensing. Accordingly, the installation position does not need to be defined for each of the types of samples. Here, in the embodiment, the various samples include four types of a standard solution, a quality control sample, an emergency sample, and a general sample but may include at least two types among the four types.

In the example of FIG. 2, various samples are feely combined and 60 samples in total can be installed on the sample disk 102. As a result, the automatic analyzer 101 can cope with a variety of operational environments of an operator.

For example, in one clinic, it is assumed that 20 standard solutions and 20 quality control samples are measured before the start of an examination, and substantially 40 general samples, 10 emergency samples, 2 standard solutions, and 2 quality control samples are measured for each measurement after the start of the examination.

When installation positions of various samples are defined in advance, in order to analyze all the samples for one day, 90 samples in total including 40 general samples, 10 emergency samples, 20 standard solutions, and 20 quality control samples need to be installed. In consideration of a variation in the number of patients in a time period, on a day of the week, or in a season, 90 positions or more are required in consideration of a margin.

In the case of a sample disk where 110 samples in total including 45 general samples, 15 emergency samples, 25 standard solutions, and 25 quality control samples can be installed in consideration of a margin, before the start of the examination, 40 positions among 110 positions are used for the measurement of 20 standard solutions and 20 quality control samples in the measurement, and 70 positions are vacant positions. After the start of the examination, 54 positions are used for the measurement of 40 general samples, 10 emergency samples, 2 standard solutions, and 2 quality control samples, and 56 positions are vacant positions.

On the other hand, when there is no constraint to the installation positions as in the sample disk 102, before the start of the examination, 20 standard solutions and 20 quality control samples can be measured using 40 positions among 60 positions.

Therefore, in the measurement after the start of the examination, 40 general samples, 10 emergency samples, 2 standard solutions, and 2 quality control samples can be measured using 54 positions among 60 positions. This way, 60 positions can be used without waste (vacant positions can be made not to be present), and thus a reduction in the space of the sample disk 102 can be implemented.

As described above, the constraint to the installation positions on the sample disk 102 can be completely reduced. However, the present invention is not limited to this example, the use of a part of the positions can be defined in advance.

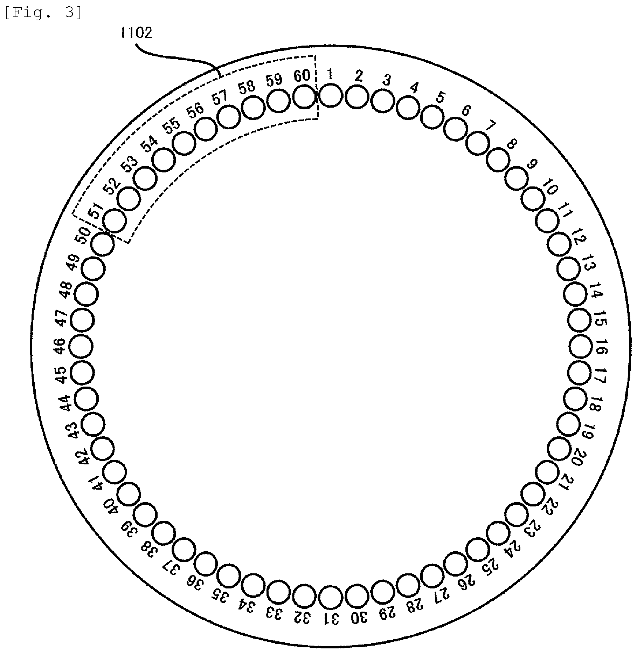

For example, as illustrated in FIG. 3, positions 51 to 60 can be defined in advance as a position 1102 where only the emergency sample can be installed.

Further, in the automatic analyzer 101 according to the embodiment, the number of installation positions of the sample disk 102 in the apparatus is one. However, it may be configured to physically alternate and use two sample disks 102. As an operation, the two sample disks 102 may be alternately exchanged, or intermediate addition, replacement, or the like of samples may be executed through a small window provided in the sample disks 102.

Referring back to FIG. 1, in order to simply execute the sample management, a barcode for identification can be attached to the sample container 103. In the barcode, information regarding a sample ID or a sample type is written. The barcode attached to the sample container 103 is read by a barcode reader 132. The input of the information of the sample container 103 is not limited to the configuration of being automatically read using the barcode. A configuration in which the operator input the information using an input unit 126b of the operation unit 126 can be adopted.

The sample dispensing mechanism 104 is configured by a rotation driving mechanism, a vertical driving mechanism, and a dispensing probe, and moves between a sample aspiration position and a sample discharge position using the rotation driving mechanism and the vertical driving mechanism to dispense the sample.

The reagent storage 105 is a mechanism for storing a reagent pack (not illustrated) containing a reagent, and includes a reagent disk 106 and a reagent pack holding unit 107. The reagent storage 105 has a cooling function for improving on-board stability of reagent properties.

The reagent pack holding units 107 are arranged in a double ring shape on the reagent disk 106 such that a plurality of reagent packs can be held. The reagent disk 106 includes a rotation driving mechanism such that each of the reagent packs is moved to a predetermined position on the circumference portion by the rotation movement.

In the automatic analyzer 101 according to the embodiment, the reagent dispensing mechanism 108 for biochemical analysis and the reagent dispensing mechanism 109 for immunological analysis are individually provided. The reagent dispensing mechanisms 108 and 109 have a common configuration including a rotation driving mechanism, a vertical driving mechanism, and a dispensing probe. The reagent dispensing mechanisms 108 and 109 are rotated and lowered to a predetermined type of reagent pack position on the reagent disk 106, and a predetermined amount of the reagent is aspirated. After the reagent aspiration, the reagent dispensing mechanisms 108 and 109 are raised. Next, regarding a reagent discharge destination, for example, the reagent dispensing mechanism 108 for biochemical analysis is rotated and lowered to a predetermined reaction cell on the incubator disk 110 to discharge the reagent, and the reagent dispensing mechanism 109 for immunological analysis is rotated and lowered to a reaction vessel installed at a reagent discharge position 111 to discharge the reagent.

On the reagent disk 106, the magnetic particle stirring arm 112 (also called a stirrer) is set as stirring means. This magnetic particle stirring arm 112 moves to an upper region of a reagent pack containing a magnetic particle solution to be stirred, a magnetic particle stirring element of the magnetic particle stirring arm 112 is lowered, and this stirring element is rotated to stir the magnetic particle solution. In order to prevent the magnetic particles in the solution from naturally precipitating, the magnetic particle stirring arm 112 stirs magnetic particles immediately before dispensing the reagent.

Hereinafter, the immunological analysis flow will be described in order of process.

The first reaction vessel transport unit 117 includes driving mechanisms in X-axis, Y-axis, Z-axis directions and a reaction vessel holding mechanism, and moves along upper regions of the reaction vessel disposal hole 113, the incubator block 114, the reaction liquid stirring unit 115, and the reaction vessel tray 116.

The second reaction vessel transport unit 119 includes a rotation driving mechanism, a vertical driving mechanism, and a reaction vessel holding mechanism and has a function of moving the reaction vessel to the reaction liquid stirring unit 115 or each of reaction vessel installation positions such as a sample discharge position 118 that is provided on a rotational trajectory.

The first reaction vessel transport unit 117 moves the reaction vessel from the reaction vessel tray 116 to the sample discharge position 118. The sample dispensing mechanism 104 dispenses a predetermined amount of the sample into the reaction vessel installed at the sample discharge position. Next, the reaction vessel into which the sample is discharged is moved to the reagent discharge position 111 by the second reaction vessel transport unit 119.

The reagent dispensing mechanism 109 dispenses a predetermined amount of the reagent into the reaction vessel installed at the reagent discharge position 111. Next, the reaction vessel is moved to the reaction liquid stirring unit 115 by the second reaction vessel transport unit 119, and the sample and the reagent are stirred.

After stirring the reaction liquid, the reaction vessel is moved to the incubator block 114 by the first reaction vessel transport unit 117. The incubator block 114 is kept at an appropriate temperature in order to promote the reaction of the sample and the reagent, and when the reaction process of the sample and the reagent on the incubator block 114 is completed, the reaction vessel is moved to the sample discharge position 118 by the first reaction vessel transport unit 117.

Next, the reaction vessel is moved to a reaction liquid aspiration position 121 provided below the immunodetection unit 120 by the second reaction vessel transport unit 119. Next, the reaction liquid is aspirated to a detection unit in the immunodetection unit 120, and a reaction signal is measured.

After the signal measurement, the reaction vessel is moved to the sample discharge position 118 by the second reaction vessel transport unit 119, and subsequently is disposed to the reaction vessel disposal hole 113 by the first reaction vessel transport unit 117.

Hereinafter, the biochemical analysis flow will be described in order of process.

As in the incubator block 114, the incubator disk 110 is kept at an appropriate temperature in order to promote the reaction of the sample and the reagent.

First, the sample dispensing mechanism 104 dispenses a predetermined amount of the sample into a predetermined reaction cell on the incubator disk 110. Next, the incubator disk 110 rotates, the reaction cell into which the sample is discharged is moved to the access position of the reagent dispensing mechanism 108, and the reagent dispensing mechanism 108 dispenses a predetermined amount of the reagent into the reaction cell into which the sample is discharged.

Next, the incubator disk 110 rotates, the reaction cell into which the sample and the reagent are discharged is moved to an installation position of the stirring unit 122, and the sample and the reagent are stirred by the stirring unit 122.

When the reaction process of the sample and the reagent on the incubator disk 110 is completed, the incubator disk 110 rotates, and the reaction cell containing the reaction liquid after the reaction completion is moved to an installation position of the biochemical detection unit 123.

Next, the measurement of the reaction signal is executed by the detection unit in the biochemical detection unit 123. After the signal measurement, the reaction liquid is discharged from the reaction cell by the reaction cell cleaning mechanism 124.

In the automatic analyzer 101, the above-described mechanism is called an analysis operation unit.

In addition to the analysis operation unit, the automatic analyzer 101 further includes the control device 125 that control the operation of each of the units in the automatic analyzer 101 including the sample disk 102 and the sample dispensing mechanism 104 and the operation unit 126.

The control device 125 is configured by, for example, a hardware substrate and a computer, in which a storage unit 127 such as a hard disk and a control unit 128 is built.

The storage unit 127 stores, for example, a control parameter corresponding to each of the units, sample information regarding various samples, information on the priority of dispensing between various samples, and information on a constraint condition of the priority of dispensing between various samples.

The control unit 128 according to the embodiment controls, based on the information on the priority and the information on the constraint condition, the operation of the sample disk 102 and the sample dispensing mechanism 104 such that the samples are sequentially dispensed from a sample of a type having a highest priority while following the constraint condition. In addition, the control unit 128 causes a display unit 126a to display a priority setting screen 301 where the operator sets the priority or a mode setting screen 501. The details of the control will be described below.

The control unit 128 may be configured as hardware by a dedicated circuit board, or may be configured by software to be executed by a computer. When the control unit 128 is configured by the hardware, the control unit 128 can be implemented by accumulating a plurality of arithmetic units that execute the process on a wiring substrate or in a semiconductor chip or a package. When the control unit 128 is configured by the software, the control unit 128 can be implemented by mounting a high-performance general-purpose CPU on a computer and executing a program that executes desired arithmetic processing. An existing apparatus can also be upgraded by a recording medium in which the program is recorded. In addition, these apparatuses, circuits, or computers are connected to each other via a wired or wireless network and exchange data appropriately.

The operation unit 126 is configured by the display unit 126a which is a display and the input unit 126b such as a mouse or a keyboard. The display unit 126a displays the information stored in the storage unit 127.

The configuration of the automatic analyzer 101 according to the embodiment is as described above.

The configuration of the automatic analyzer is described above using, as an example, a case where both of the immunodetection unit 120 and the biochemical detection unit 123 are mounted as illustrated in FIG. 1. However, the automatic analyzer to which the present invention is applied only needs to include the sample disk 102. For example, the present invention is also applicable to an automatic analyzer that includes any one of the immunodetection unit or the biochemical detection unit or includes a detection unit for another analysis item in addition to or instead of the immunodetection unit or the biochemical detection unit as long as the automatic analyzer includes the sample disk.

In addition, the automatic analyzer is not limited to single analysis module configuration illustrated in FIG. 1, and a configuration in which two or more modules including analysis modules that can measure the same or different analysis items or a pre-treatment modules that executes a pre-treatment are connected using a transport device can be adopted.

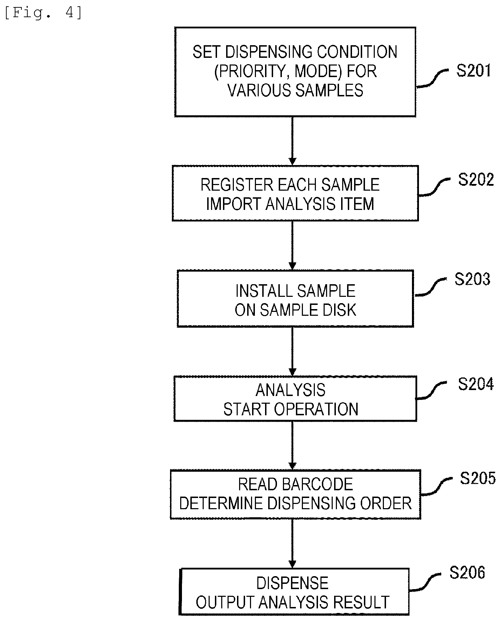

Next, regarding the control of the control unit 128 in the automatic analyzer 101 according to the embodiment, the details of various screens displayed by the display unit 126a will be described using FIG. 4 and the following drawings.

### <Flowchart from Setting of Priority to Output of Analysis Result>

FIG. 4 is a flowchart illustrating a basic operation from the setting of the priorities of various samples (a general sample, an emergency sample, a quality control sample, and a standard solution) to the output of the analysis result in the automatic analyzer 101 according to the present invention.

First, as illustrated in FIG. 4, the operator operates the input unit 126b of the operation unit 126 to set dispensing conditions (priorities, mode) of various samples, and the storage unit 127 in the automatic analyzer 101 stores the priorities and the mode that are set (Step S201).

The priorities allocated to various samples by the operator will be called priority numbers. For example, in a case where four types including "the general sample, the emergency sample, the quality control sample, and the standard solution" are treated as the samples, any one of the priority numbers "1" to "4" is allocated to each of various samples without duplication. Here, as the priority number decreases, the priority is defined to be higher (more preferentially dispensed). That is, when the priorities are set as "4: general sample, 2: emergency sample, 3: quality control sample, and 1: standard solution", the samples are dispensed in order of "standard solution → emergency sample → quality control sample → general sample". In addition, the dispensing priorities and the mode (the details will be described below) will be collectively called the dispensing conditions.

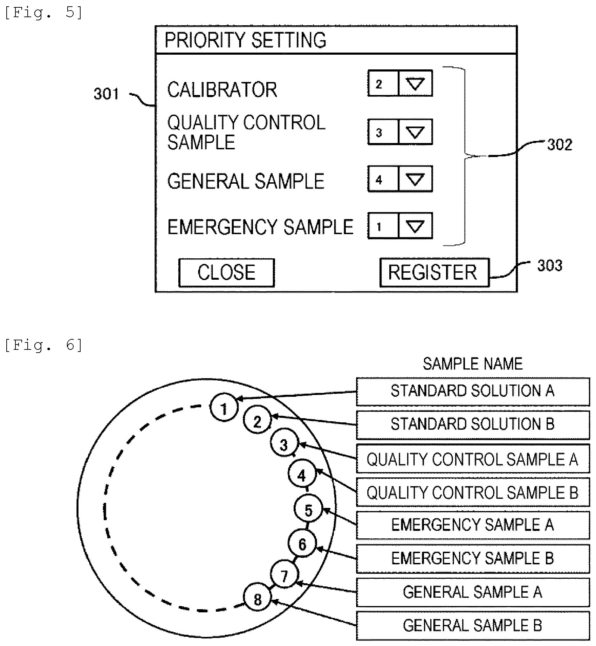

FIG. 5 illustrates an example of the screen where the priorities of various samples are set in this step.

The priority setting screen 301 illustrated in FIG. 5 is a screen for allowing the operator to input any priority. In the priority setting screen 301, the priority number of each of the samples is selected through a pull-down 302 using the operation unit 126, and a registration button 303 is pressed to complete the setting. For the priorities of various samples input from the pull-down 302, the dispensing order is set in order of 1 → 2 → 3 → 4.

In order to prevent the duplication of the priority numbers, when the registration button 303 is pressed in a state where the same number such as 1 is input to the emergency sample and the standard solution in the pull-down 302, the duplication of the number can be notified to the operator, and a pop-up screen urging the operator to reinput the number can also be displayed. Further, in a case where a setting miss is suspicious, for example, "when the priority of the general sample is higher than that of the emergency sample", a function of displaying a pop-up screen urging the operator to recheck the setting can be imparted.

Next, the control unit 128 registers each of the samples and imports an analysis item requested for each of the samples (Step S202). The registration of each of the samples and the import of the analysis request into the apparatus can be implemented in a form where the data is transmitted to and received from an external host computer or in a form where the data is manually input by the operator. For a sample to which a barcode is not attached, it may be necessary to input an installation position during the import of the analysis item. The import of the position information of a sample to which a barcode is attached will be described below in Step S205.

Next, the operator installs the samples on the sample disk 102 (Step S203). This operation can be executed while executing the sample registration and the import of the analysis item in Step S202. In addition, in the embodiment, as illustrated in FIG. 2, the sample disk 102 has no constraint to the installation range for each of the types of the samples. That is, regardless of the type of the sample, the sample can be freely installed at any position.

FIG. 6 illustrates an example where the operator installs various samples on the sample disk 102. FIG. 6 illustrates a state where 8 samples are installed at positions 1 to 8 of the sample disk 102. The standard solutions are installed at the positions 1 and 2, the quality control samples are installed at the positions 3 and 4, the emergency samples are installed at the positions 5 and 6, and the general samples are installed at the positions 7 and 8. In addition, a barcode is attached to each of the samples installed at the positions 1 to 8.

Next, the operator instructs the apparatus to start the analysis from the operation unit 126 (Step S204), and the control unit 128 executes the analysis operation.

Next, the barcode of the sample container with the barcode is read by the barcode reader 132 (Step S205). Here, the apparatus compares the information read from the barcode and the information (the analysis request information of each of the samples) registered in Step S202 to each other, and identifies the type of the sample (which one of the general sample, the emergency sample, the quality control sample, or the standard solution the sample corresponds to) and the installation position.

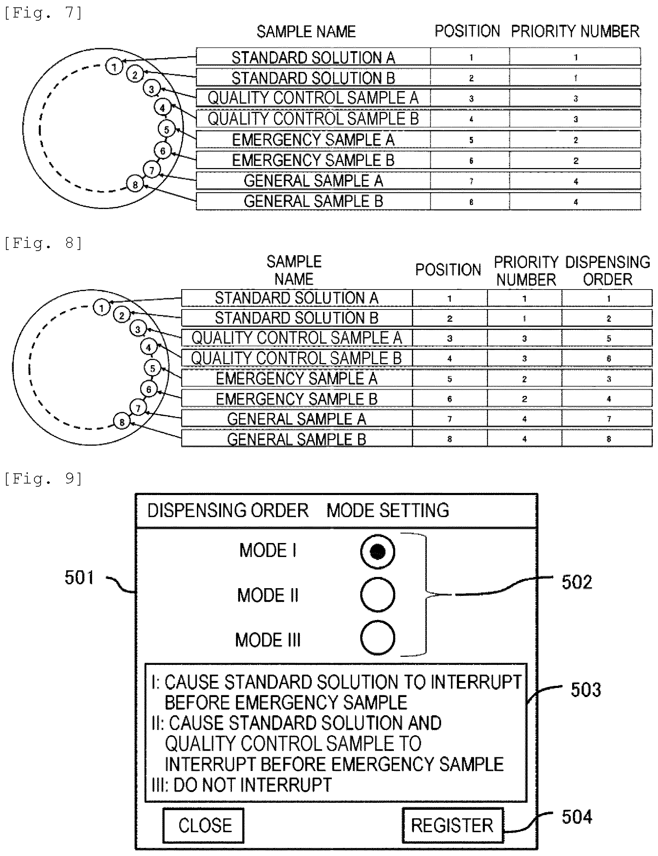

In addition, the priority number set in Step S201 is allocated to each of the samples. As illustrated in FIG. 7, when the reading of the barcode is completed for all of the samples, the storage unit 127 stores the installation position and the priority number of each of the samples in association with each other. Further, as illustrated in FIG. 8, the priority of dispensing is set based on the position information and the priority number of each of the samples.

Here, in the automatic analyzer 101 according to the present invention, the dispensing priority follows the priority (1: standard solution, 2: emergency sample, 3: quality control sample, 4: general sample) set in Step S201 as long as it follows the constraint condition described below. Further, when a plurality of samples having the same type (having the same priority number) are installed on the same disk, the samples are preferentially dispensed in order from the smallest installation position number. The rule of assigning the priorities to the same type of samples is not limited to this example, and may be set as, for example, "the samples are preferentially dispensed in order from the smallest sample ID read from the barcode" or "the samples are preferentially dispensed in the order in which the samples are registered in Step S202".

Referring back to FIG. 4, finally, the control unit 128 controls the operations of the sample disk 102 and the sample dispensing mechanism 104 according to the dispensing order determined in Step S205, and executes the dispensing (Step S206). The dispensed sample is measured by the analysis unit, and the analysis result is output (Step S206).

### <Pattern Selection Method regarding Priority>

As a method of setting the priorities, not only the method of inputting numbers to the pull-down 302 on the priority setting screen 301 illustrated in FIG. 5 but also a method of allowing the operator to select the priorities from a combination of a predetermined couple of patterns can be used.

Hereinafter, an example of selecting the priorities from three patterns including a pattern 1 (1: emergency sample, 2: standard solution, 3: quality control sample, 4: general sample), a pattern 2 (1: standard solution, 2: emergency sample, 3: quality control sample, 4: general sample), and a pattern 3 (1: standard solution, 2: quality control sample, 3: emergency sample, 4: general sample) will be described.

The pattern 1 is a combination that is effective when it is desired to execute the analysis of the emergency sample in the shortest time because the emergency sample has the highest priority.

The pattern 2 is a combination that prevents the analysis cancellation due to the absence of the valid analysis result of the standard solution for the analysis item allocated to the emergency sample.

In the automatic analyzer 101, by analyzing the standard solution corresponding to each of the analysis items, a calibration curve (for calculating the component concentration in blood from the signal value obtained by the detection unit) is generated for each of the analysis items. In the reagent used for the analysis, reagent properties change over time due to evaporation of the component. Therefore, a validity period is determined in many cases for the obtained calibration curve. When the validity period is expired, it is necessary to generate the calibration curve again, and the analysis item cannot be requested until the calibration curve is generated again (this state is called item masking). When it is preferable that the priority of the standard solution is set to the highest to reliably avoid the calibration curve from being invalid, the pattern 2 is extremely effective.

The pattern 3 is a combination in which the quality control sample is always analyzed immediately before the emergency sample. Therefore, this pattern 3 is effective when it is desired to determine the analysis result of the emergency sample in consideration of the previous quality control state.

It is desirable that a priority pattern other than the above-described three patterns can also be set. In addition, it is desirable that the method of setting the priorities is not limited to the method of inputting the priorities using the display unit 126a or the input unit 126b such as a mouse or a keyboard.

### <Mode Setting of Dispensing Order>

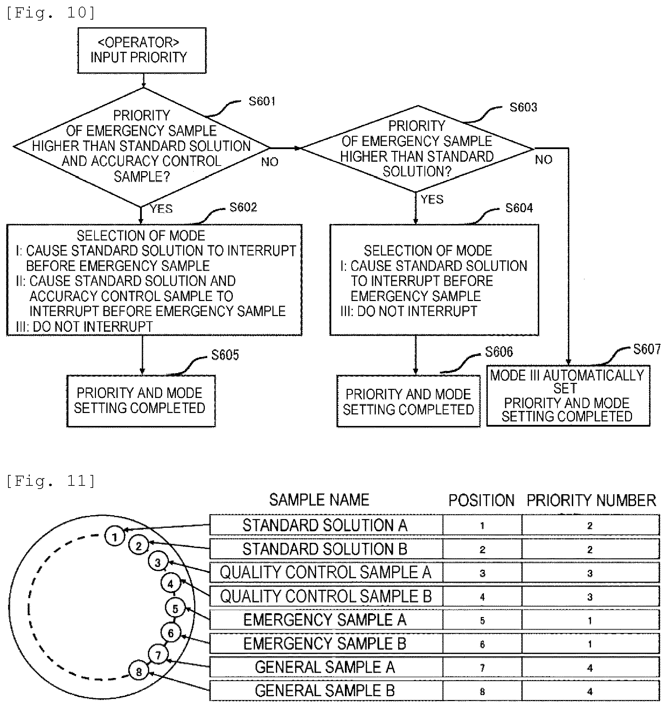

As in the pattern 1, a circumstance in which the priority of the emergency sample is set to be higher than that of the standard solution and the analysis item allocated to the emergency sample is masked is considered. Here, when the mask item is requested for the analysis, the analysis cannot be executed, and thus the analysis request is automatically cancelled. One control for avoiding this circumstance is mode selection of the dispensing order. The details will be described using FIGS. 9 and 10.

FIG. 9 illustrates an example of a mode setting screen of the dispensing order. The mode setting screen 501 illustrated in FIG. 9 includes a check box 502 where the mode is selected, a mode description column 503, and a mode registration button 504. In the check box 502 and the mode description column 503, the display contents change depending on the priority set by the operator in Step S201.

Here, a mode I is a control of "causing the standard solution to interrupt before the emergency sample" regardless of the setting of the priority setting screen 301 illustrated in FIG. 5. Therefore, when the priority of the emergency sample is set to be higher than that of the standard solution in the setting of the priority and an item having no valid standard solution data is present among the measurement items of the emergency sample, the corresponding standard solution is dispensed with priority over the emergency sample.

A mode II is a control of "causing the standard solution and the quality control sample to interrupt before the emergency sample" regardless of the setting of the priority setting screen 301 illustrated in FIG. 5.

A mode III is a control of "do not interrupt", that is, according to the setting of the priority setting screen 301 illustrated in FIG. 5.

The mode I, the mode II, and the mode III are the constraint conditions in the present invention.

Accordingly, in the embodiment, when the priority of the emergency sample is set to be higher than that of the standard solution and the quality control sample, the control unit 128 causes the display unit 126a to display the mode setting screen 501 allowing selection of whether to allocate dispensing of both the standard solution and the quality control sample before the emergency sample or allocate only the standard solution. FIG. 10 is a flowchart illustrating the method of selecting the display content on the mode setting screen 501 according to the set priorities.

Here, a case where the samples are registered by the operator in the order of "1: emergency sample, 2: standard solution, 3: quality control sample, 4: general sample" on the priority setting screen 301 will be described as an example.

First, the control unit 128 determines whether the priority of the emergency sample is higher than those of the standard solution and the quality control sample (Step S601). When the control unit 128 determines that the priority of the emergency sample is higher than those of the standard solution and the quality control sample, the process proceeds to Step S602. When the control unit 128 determines that the priority of the emergency sample is not higher than those of the standard solution and the quality control sample, the process proceeds to Step S603.

Since YES is determined here, the control unit 128 displays the three options including the mode I, the mode II, and the mode III and the corresponding description column on the mode setting screen 501 as illustrated in FIG. 9 (Step S602). When the control unit 128 recognizes that the operator presses the registration button 504 after selecting the mode from the check box 502 of the mode setting screen 501, the control unit 128 completes the mode setting process (Step S605).

Next, a case where the samples are registered in the order of "1: quality control sample, 2: emergency sample, 3: standard solution, 4: general sample" on the priority setting screen 301 will be described as an example.

In this case, since the priority of the emergency sample is lower than that of the quality control sample, NO is determined in Step S601. Therefore, next, the control unit 128 determines whether the priority of the emergency sample is higher than that of the standard solution (Step S603). When the control unit 128 determines that the priority of the emergency sample is higher than that of the standard solution, the process proceeds to Step S604. When the control unit 128 determines that the priority of the emergency sample is not higher than that of the standard solution, the process proceeds to Step S607.

Here, YES is determined, and the control unit 128 displays the options including the mode I and the mode III and the corresponding description column on the mode setting screen 501 unlike in FIG. 9 (Step S604). When the control unit 128 recognizes that the operator presses the registration button 504 after selecting the mode from the check box 502, the control unit 128 completes the mode setting process (Step S606).

Finally, a case where the samples are registered in the order of "1: standard solution, 2: quality control sample, 3: emergency sample, 4: general sample" on the priority setting screen 301 will be described as an example.

In this case, the priority of the emergency sample is lower than that of the quality control sample (NO is determined in Step S601), and the priority of the emergency sample is lower than that of the standard solution (NO is determined in Step S603). Therefore, the mode setting screen 501 is not displayed, the mode III is automatically selected (Step S607), and the process is completed.

Next, when the samples are registered in the order of "1: emergency sample, 2: standard solution, 3: quality control sample, 4: general sample" on the priority setting screen 301, the dispensing order when each of the modes is set will be described using FIGS. 11 to 14.

For example, the state where the samples are installed are illustrated in FIG. 11. In addition, it is assumed that a part of analysis items allocated to an emergency sample A are masked and the analysis is requested for the item. Further, the standard solution and the quality control sample corresponding to the mask item are a standard solution A and a quality control sample A, respectively, and these samples are installed on the same sample disk 102.

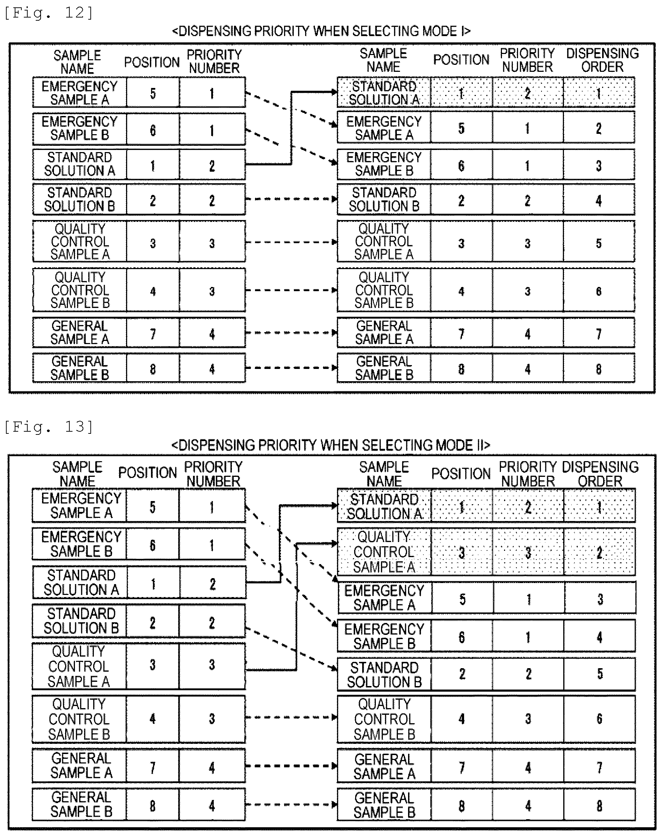

FIGS. 12 to 14 illustrate the dispensing orders when the mode I, the mode II, and the mode III are selected on the mode setting screen 501, respectively. Hereinafter, the behavior of the system when each of the modes is selected will be described.

When the mode I is selected, as illustrated in FIG. 12, in order to avoid the analysis cancelation of the emergency sample A due to the item masking, dispensing of the standard solution A is caused to interrupt before the emergency sample A. As a result, the calibration curve can be generated again using the standard solution A before the analysis of the emergency sample A. That is, the analysis cancelation of the emergency sample A can be prevented. In addition, as long as an irregular case where "the analysis of the emergency sample cannot be executed due to analysis item masking caused by expiration of the validity period of the calibration curve" does not occur, the emergency sample can be always rapidly analyzed.

In addition, in the mode I illustrated in FIG. 12, interruption is made only for the dispensing of the standard solution A before the emergency sample A. On the other hand, in the mode II, interruption is made also for the dispensing of the quality control sample A as illustrated in FIG. 13. Accordingly, the analysis cancelation of the emergency sample A can be prevented as in the mode I. Further, unlike the mode I, the quality control sample A is analyzed immediately before the emergency sample A. Therefore, the analysis result of the emergency sample A can be determined in consideration of the quality control state.

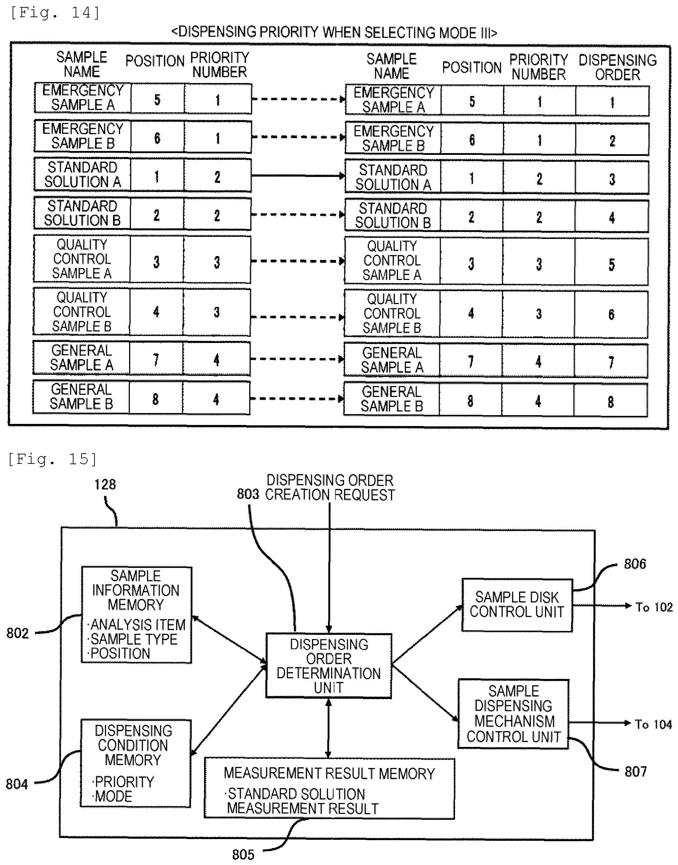

As illustrated in FIG. 14, when the mode III is selected, the interruption is not automatically executed, and the dispensing is executed according to the set priorities. Therefore, the dispensing order completely follows the set priorities (1: emergency sample, 2: standard solution, 3: quality control sample, 4: general sample).

When any of the analysis items allocated to the emergency sample is not masked, the emergency sample or the standard solution does not need to be dispensed, and the dispensing does not need to be interrupted. Therefore, even when the mode I or the mode II is selected, the dispensing order completely follows the set priorities as in the mode III.

### <Determination of Dispensing Order>

Next, the determination of the dispensing order in Step S205 will be described using FIGS. 15 to 17. FIG. 15 is an example of a functional block diagram of the control unit 128 that controls the operations of the sample disk 102 and the sample dispensing mechanism 104.

As illustrated in FIG. 15, the control unit 128 includes, for example, a sample information memory 802, a dispensing order determination unit 803, a dispensing condition memory 804, a measurement result memory 805, a sample disk control unit 806, and a sample dispensing control unit 807.

The sample information memory 802 stores the type of the sample for which the analysis is requested, the analysis item, and the installation position of the sample disk 102. The dispensing condition memory 804 stores the setting of the dispensing conditions (priorities, mode). The measurement result memory 805 stores the measurement result of the standard solution. The sample disk control unit 806 controls the operation of the sample disk 102. The sample dispensing control unit 807 controls the operation of the sample dispensing mechanism 104.

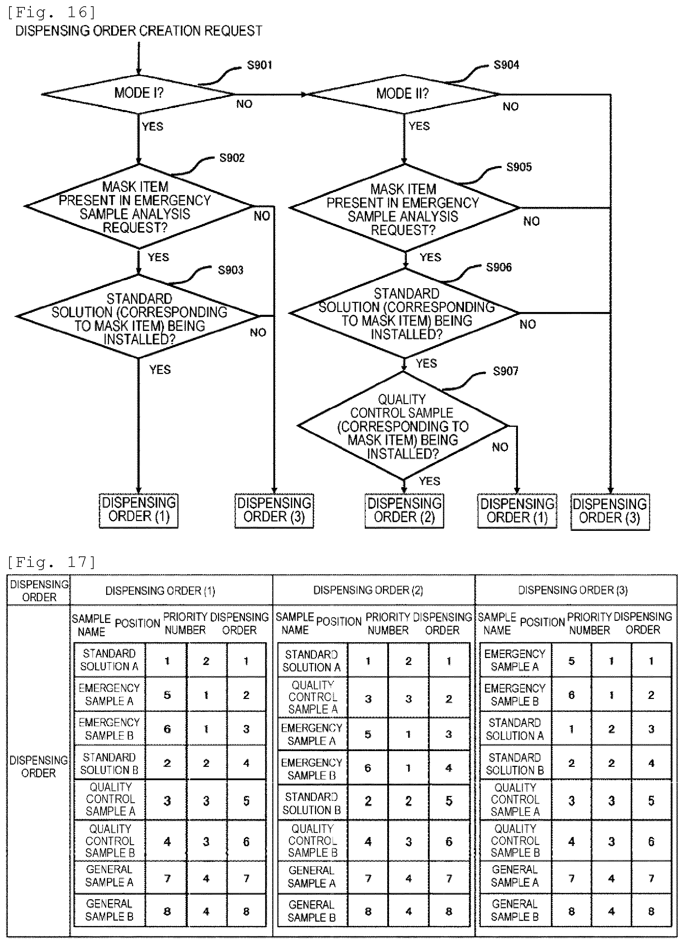

FIG. 16 is an example of a flowchart illustrating the process in which the dispensing order determination unit 803 determines the dispensing order. In addition, FIG. 17 illustrates the pattern of the dispensing order determined by the flowchart of FIG. 16 when the priorities are set as "1: emergency sample, 2: standard solution, 3: quality control sample, 4: general sample" and the samples are installed as illustrated in FIG. 11.

As described above, in Step S201, when the setting of the dispensing conditions is completed, the dispensing condition memory 804 stores the setting thereof. Next, when the registration of each of the samples and the import of the analysis item are executed in Step S202, the sample information memory 802 stores the information regarding the type of the sample, the analysis item, the installation position. For a sample to which a barcode is attached, when the apparatus reads barcode information, the sample information is stored. When the operator executes the analysis start operation in Step S204, a dispensing order creation request is transmitted to the dispensing order determination unit 803.

As illustrated in FIG. 16, in response to the dispensing order creation request, the dispensing order determination unit 803 refers to the information stored in the dispensing condition memory 804 and determines whether the mode I is selected (Step S901).

When it is determined that the mode I is selected by the operator, the process proceeds to Step S902. Next, the dispensing order determination unit 803 refers to the information stored in the sample information memory 802 and the measurement result memory 805, and determines whether the mask item is present in the analysis request of the emergency sample (Step S902).

When the analysis items that are requested for the emergency sample include the mask item, the process proceeds to Step S903, and whether the standard solution (referred to as the standard solution A) corresponding to the mask item of the emergency sample (referred to as the emergency sample A) is installed on the sample disk 102 is determined (Step S903) .

When the standard solution (corresponding to the mask item) is not installed, the dispensing order completely follows the set priorities (1: emergency sample, 2: standard solution, 3: quality control sample, 4: general sample), that is, a dispensing order (3) illustrated in FIG. 17 is determined. Note that, although the analysis item that is not masked is executed as requested, the analysis request for the mask item of the emergency sample is automatically canceled.

In addition, the dispensing order (3) illustrated in FIG. 17 is determined also in the case where it is determined that the mask item is not included in Step S902. In this case, all the analysis requests are executed without being canceled.

On the other hand, when it is determined that the standard solution (standard solution A) corresponding to the mask item is installed in Step S903, the dispensing order is determined as a dispensing order (1) illustrated in FIG. 17 of causing the standard solution (standard solution A) to interrupt immediately before the emergency sample (emergency sample A) .

On the other hand, when the operator does not select the mode I in Step S901, the process proceeds to Step S904. As in Step S901, the dispensing order determination unit 803 refers to the dispensing condition memory 804 and determines whether the operator selects the mode II (Step S904).

When it is determined that the mode II is selected, the process proceeds to Step S905. Next, the dispensing order determination unit 803 refers to the information stored in the sample information memory 802 and the measurement result memory 805, and determines whether the mask item is present in the analysis request of the emergency sample (Step S905).

When the analysis items that are requested for the emergency sample include the mask item, the process proceeds to Step S906, and whether the standard solution (referred to as the standard solution A) corresponding to the mask item of the emergency sample (referred to as the emergency sample A) is installed on the sample disk 102 is determined (Step S906).

Next, when it is determined that the standard solution (standard solution A) is installed on the sample disk 102, the process proceeds to Step S907, and the dispensing order determination unit 803 refers to the sample information memory 802 as in Steps S903 and S906, and determines whether the quality control sample (referred to as quality control sample A) corresponding to the mask item is installed on the sample disk 102 (Step S907).

When it is determined that the quality control sample (corresponding to the mask item) is installed, the dispensing order is determined as a dispensing order (2) illustrated in FIG. 17 of causing the standard solution (standard solution A) and the quality control sample (quality control sample A) to interrupt immediately before the emergency sample (emergency sample A).

On the other hand, when it is determined that the quality control sample (corresponding to the mask item) is not installed, the dispensing order is determined as the dispensing order (1) illustrated in FIG. 17 of causing only the dispensing of the standard solution (standard solution A) to interrupt immediately before the emergency sample (emergency sample A).

In addition, when it is determined that the mode II is not selected in Step S904 (when the operator selects the mode III), when it is determined that the mask item is not present in the analysis request of the emergency sample in Step S905, and when it is determined that the standard solution (referred to as the standard solution A) is not installed on the sample disk 102 in Step S906, the dispensing order is determined as the dispensing order (3) illustrated in FIG. 17.

Next, the effect of the embodiment will be described.

The automatic analyzer 101 according to the embodiment includes: the sample disk 102 on which a plurality of sample containers 103 each containing a sample can be installed in a circumferential direction; the sample dispensing mechanism 104 configured to dispense the samples; the control unit 128 configured to control an operation of the sample disk 102 and the sample dispensing mechanism 104; and the storage unit 127 configured to store sample information relating to various samples, in which the storage unit 127 stores information on a priority of dispensing among the various samples and information on a constraint condition of the priority of dispensing of the various samples, and the control unit 128 controls, based on the information on the priority and the information on the constraint condition, an operation of the sample disk 102 and the sample dispensing mechanism 104 such that the samples are sequentially dispensed from a sample of a type having a highest priority while following the constraint condition.

As a result, the dispensing priorities of various samples installed on the sample disk 102 can be made variable, and when the dispensing priorities are variable depending on the constraint conditions, an increase in the period of time can be suppressed. Therefore, the automatic analyzer can cope with various operational environments of the operator, and the analysis throughput can be improved.

In addition, the automatic analyzer further includes the display unit 126a configured to display the information stored in the storage unit 127, in which the control unit 128 causes the display unit 126a to display the priority setting screen 301 where the operator sets the priority. Therefore, the setting of the priority is extremely easy, and an apparatus configuration having higher convenience for the operator can be adopted.

Further, the priority setting screen 301 is a screen for allowing the operator to input any priority. As a result, the automatic analyzer is easily applicable to various operational environments.

In addition, on the input screen, a combination of a predetermined couple of patterns of priorities is displayed, and one of the displayed patterns is selected. As a result, even for an operator who are not familiar with and are inexperienced for the analysis, the operating conditions can be selected freely to some extent, and the automatic analyzer can cope with more various operational environments.

Further, the various samples include at least two of the standard solution, the quality control sample, the emergency sample, and the general sample. As a result, most of various operating conditions can be covered.

In addition, in the constraint condition, when the priority of the emergency sample is set to be higher than that of the standard solution in the setting of the priority and an item having no valid standard solution data is present among the measurement items of the emergency sample, the corresponding standard solution is dispensed with priority over the emergency sample. As a result, an increase in the period of time taken to output the analysis result can be reliably avoided.

Further, the automatic analyzer further includes the display unit 126a configured to display the information stored in the storage unit 127, and when the priority of the emergency sample is set to be higher than that of the standard solution and the quality control sample, the control unit 128 causes the display unit 126a to display the mode setting screen 501 allowing selection of whether to allocate dispensing of both the standard solution and the quality control sample before the emergency sample or allocate only the standard solution. As a result, whether a constraint is imposed by the operator can be easily determined and set.

In addition, the sample containers 103 can be installed at any position on the sample disk 102 regardless of the type of the samples. As a result, the operator can freely install the sample containers, and the burden can be further reduced.

Further, the sample disk 102 is provided with the position 1102 in which only the emergency sample can be installed. As a result, there is an advantageous effect in that, when the operator manually inputs the installation position during the registration of samples to which a barcode is not attached, erroneous placement can be prevented.

### <Others>

The present invention is not limited to the above-described embodiment, and various modifications and applications can be made. The embodiment has been described in detail in order to easily describe the present invention, and the present invention is not necessarily to include all the configurations described above.

### Reference Signs List

- 101:: automatic analyzer
- 102:: sample disk
- 103:: sample container
- 104:: sample dispensing mechanism
- 105:: reagent storage
- 106:: reagent disk
- 107:: reagent pack holding unit
- 108, 109:: reagent dispensing mechanism
- 110:: incubator disk
- 111:: reagent discharge position
- 112:: magnetic particle stirring arm
- 113:: reaction vessel disposal hole
- 114:: incubator block
- 115:: reaction liquid stirring unit
- 116:: reaction vessel tray
- 117:: first reaction vessel transport unit
- 118:: sample discharge position
- 119:: second reaction vessel transport unit
- 120:: immunodetection unit
- 121:: reaction liquid aspiration position
- 122:: stirring unit
- 123:: biochemical detection unit
- 124:: reaction cell cleaning mechanism
- 125:: control device
- 126:: operation unit
- 126a:: display unit
- 126b:: input unit
- 127:: storage unit
- 128:: control unit
- 132:: barcode reader
- 301:: priority setting screen (input screen)
- 302:: pull-down
- 303:: registration button
- 501:: mode setting screen (input screen)
- 502:: check box
- 503:: mode description column
- 504:: mode registration button
- 802:: sample information memory
- 803:: dispensing order determination unit
- 804:: dispensing condition memory
- 805:: measurement result memory
- 806:: sample disk control unit
- 807:: sample dispensing control unit
- 1101:: position
- 1102:: position (region)

## Claims

1. An automatic analyzer comprising:
a sample disk (102) on which a plurality of sample containers (103) each containing a sample can be installed in a circumferential direction;
a dispensing mechanism (104) configured to dispense the samples;
a control unit (128) configured to control an operation of the sample disk and the dispensing mechanism; and
a storage unit (127) configured to store sample information relating to various samples of different types, the types including a standard solution, a quality control sample, an emergency sample, and a general sample,
wherein the storage unit is adapted to store information on a priority of dispensing for each of the types of the various samples and information on a constraint condition of the priority of dispensing of the various samples,
the control unit is adapted to control, based on the information on the priority and the information on the constraint condition, the operation of the sample disk and the dispensing mechanism such that the samples are sequentially dispensed from a sample of a type having a highest priority while following the constraint condition, and
in the constraint condition, when a priority of the emergency sample is set to be higher than that of the standard solution in a setting of the priority and an item having no valid standard solution data is present among measurement items of the emergency sample, the control unit is adapted to control the dispensing mechanism to dispense the corresponding standard solution with priority over the emergency sample.

2. The automatic analyzer according to claim 1,
wherein the sample containers (103) can be installed at any position on the sample disk (102) regardless of the type of the samples.

3. The automatic analyzer according to claim 2,
wherein the sample disk (102) is provided with a region (1102) in which only the emergency sample can be installed.

4. A control method of an automatic analyzer, the automatic analyzer including: a sample disk (102) on which a plurality of sample containers (103) each containing a sample can be installed in a circumferential direction; a dispensing mechanism (104) that dispenses the samples; a control unit (128) that controls an operation of the sample disk and the dispensing mechanism; and a storage unit (127) that stores sample information relating to various samples of different types, the types including a standard solution, a quality control sample, an emergency sample, and a general sample, the control method comprising the steps of:
controlling, based on information on a priority of dispensing among the various samples and information on a constraint condition of the priority of dispensing of the various samples, the operation of the sample disk and the dispensing mechanism such that the samples are sequentially dispensed from a sample of a type having a highest priority while following the constraint condition; and
dispensing, when a priority of the emergency sample is set to be higher than that of the standard solution in a setting of the priority and an item having no valid standard solution data is present among measurement items of the emergency sample as the constraint condition, the corresponding standard solution with priority over the emergency sample.

5. The automatic analyzer according to claim 1, further comprising:
a display unit (126a) configured to display the information stored in the storage unit (127),
wherein the control unit (128) causes the display unit to display an input screen on which an operator sets the priority.

6. The automatic analyzer according to claim 5,
wherein the input screen (301) allows the operator to input any priority.

7. The automatic analyzer according to claim 5,
wherein on the input screen (301), a combination of a predetermined couple of patterns of priorities is displayed, and one of the displayed patterns is selected.

## Patentansprüche

1. Automatische Analysevorrichtung, umfassend:
eine Probenscheibe (102), auf der mehrere Probenbehälter (103), die jeweils eine Probe enthalten, in einer Umfangsrichtung installiert werden können;
einen Abgabemechanismus (104), der dazu eingerichtet ist, die Proben zu abzugeben;
eine Steuereinheit (128), die dazu eingerichtet ist, einen Betrieb der Probenscheibe und des Abgabemechanismus zu steuern; und
eine Speichereinheit (127), die dazu eingerichtet ist, Probeninformationen bezüglich verschiedener Proben unterschiedlicher Typen zu speichern, wobei die Typen eine Standardlösung, eine Qualitätskontrollprobe, eine Notfallprobe und eine allgemeine Probe umfassen,
wobei die Speichereinheit dazu ausgelegt ist, Informationen über eine Priorität der Abgabe für jeden der Typen der verschiedenen Proben und Informationen über eine Nebenbedingung der Priorität der Abgabe der verschiedenen Proben zu speichern,
die Steuereinheit dazu ausgelegt ist, basierend auf den Informationen über die Priorität und den Informationen über die Nebenbedingung, den Betrieb der Probenscheibe und des Abgabemechanismus so zu steuern, dass die Proben sequenziell von einer Probe eines Typs mit einer höchsten Priorität an abgegeben werden, während die Nebenbedingung eingehalten wird, und
bei der Nebenbedingung, wenn eine Priorität der Notfallprobe höher als die der Standardlösung in einer Einstellung der Priorität gesetzt ist und ein Element ohne gültige Standardlösungsdaten unter Messungselementen der Notfallprobe vorhanden ist, die Steuereinheit dazu ausgelegt ist, den Abgabemechanismus dahingehend zu steuern, die entsprechende Standardlösung mit Priorität über der Notfallprobe abzugeben.

2. Automatische Analysevorrichtung nach Anspruch 1,
wobei die Probenbehälter (103) an jeder Position auf der Probenscheibe (102) unabhängig vom Typ der Proben installiert werden können.

3. Automatische Analysevorrichtung nach Anspruch 2,
wobei die Probenscheibe (102) mit einem Bereich (1102) versehen ist, in dem nur die Notfallprobe installiert werden kann.

4. Steuerungsverfahren einer automatischen Analysevorrichtung, wobei die automatische Analysevorrichtung umfasst: eine Probenscheibe (102), auf der mehrere Probenbehälter (103), die jeweils eine Probe enthalten, in einer Umfangsrichtung installiert werden können; einen Abgabemechanismus (104), der die Proben abgibt; eine Steuereinheit (128), die einen Betrieb der Probenscheibe und des Abgabemechanismus steuert; und eine Speicher-einheit (127), die Probeninformationen bezüglich verschiedener Proben unterschiedlicher Typen speichert, wobei die Typen eine Standardlösung, eine Qualitätskontrollprobe, eine Notfallprobe und eine allgemeine Probe umfassen, wobei das Steuerungsverfahren die folgenden Schritte umfasst:
Steuern, basierend auf Informationen über eine Priorität der Abgabe unter den verschiedenen Proben und Informationen über eine Nebenbedingung der Priorität der Abgabe der verschiedenen Proben, des Betriebs der Probenscheibe und des Abgabemechanismus dahingehend, dass die Proben sequenziell von einer Probe eines Typs mit einer höchsten Priorität an abgegeben werden, während die Nebenbedingung eingehalten wird; und
Abgeben, wenn als Nebenbedingung eine Priorität der Notfallprobe höher als die der Standardlösung in einer Einstellung der Priorität gesetzt wird und ein Element ohne gültige Standardlösungsdaten unter Messungselementen der Notfallprobe vorhanden ist, der entsprechenden Standardlösung mit Priorität über der Notfallprobe.

5. Automatische Analysevorrichtung nach Anspruch 1, ferner umfassend:
eine Anzeigeeinheit (126a), die dazu eingerichtet ist, die in der Speicher-einheit (127) gespeicherten Informationen anzuzeigen,
wobei die Steuereinheit (128) die Anzeigeeinheit einen Eingabebildschirm anzeigen lässt, auf dem ein Benutzer die Priorität einstellt.

6. Automatische Analysevorrichtung nach Anspruch 5,
wobei der Eingabebildschirm (301) dem Benutzer erlaubt, irgendeine Priorität einzugeben.

7. Automatische Analysevorrichtung nach Anspruch 5,
wobei auf dem Eingabebildschirm (301) eine Kombination eines vorbestimmten Paars von Mustern von Prioritäten angezeigt wird und eines der angezeigten Muster ausgewählt wird.

## Revendications

1. Analyseur automatique comprenant :
un disque (102) pour échantillons sur lequel une pluralité de récipients (103) pour échantillon contenant chacun un échantillon peut être installée dans un sens circonférentiel ;
un mécanisme (104) de distribution configuré pour distribuer les échantillons ;
une unité (128) de commande configurée pour commander une opération du disque pour échantillons et du mécanisme de distribution ; et
une unité (127) de stockage configurée pour stocker des informations d'échantillons se rapportant à divers échantillons de différents types, les types incluant une solution standard, un échantillon de contrôle qualité, un échantillon d'urgence, et un échantillon général,
dans lequel l'unité de stockage est adaptée à stocker des informations sur une priorité de distribution pour chacun des types des divers échantillons et des informations sur une condition de contrainte de la priorité de distribution des divers échantillons,
l'unité de commande est adaptée à commander, sur la base des informations sur la priorité et des informations sur la condition de contrainte, l'opération du disque pour échantillons et du mécanisme de distribution de façon à ce que les échantillons soient séquentiellement distribués à partir d'un échantillon d'un type ayant une priorité la plus haute tout en respectant la condition de contrainte, et
dans la condition de contrainte, lorsqu'une priorité de l'échantillon d'urgence est définie pour être plus haute que celle de la solution standard dans une définition de la priorité et qu'un item n'ayant pas de données de solution standard valides est présent parmi des items de mesure de l'échantillon d'urgence, l'unité de commande est adaptée à commander le mécanisme de distribution pour distribuer la solution standard correspondante avec une priorité au-dessus de l'échantillon d'urgence.

2. Analyseur automatique selon la revendication 1,
dans lequel les récipients (103) pour échantillon peuvent être installés en une position quelconque sur le disque (102) pour échantillons quel que soit le type des échantillons.

3. Analyseur automatique selon la revendication 2,
dans lequel le disque (102) pour échantillons est prévu avec une région (1102) dans laquelle seul l'échantillon d'urgence peut être installé.

4. Procédé de commande d'un analyseur automatique, l'analyseur automatique incluant : un disque (102) pour échantillons sur lequel une pluralité de récipients (103) pour échantillon contenant chacun un échantillon peut être installée dans un sens circonférentiel ; un mécanisme (104) de distribution qui distribue les échantillons ; une unité (128) de commande qui commande une opération du disque pour échantillons et du mécanisme de distribution ; et une unité (127) de stockage qui stocke des informations d'échantillons se rapportant à divers échantillons de différents types, les types incluant une solution standard, un échantillon de contrôle qualité, un échantillon d'urgence, et un échantillon général, le procédé de commande comprenant les étapes de :
commande, sur la base d'informations sur une priorité de distribution parmi les divers échantillons et d'informations sur une condition de contrainte de la priorité de distribution des divers échantillons, de l'opération du disque pour échantillons et du mécanisme de distribution de façon à ce que les échantillons soient séquentiellement distribués à partir d'un échantillon d'un type ayant une priorité la plus haute tout en respectant la condition de contrainte, et
distribution, lorsqu'une priorité de l'échantillon d'urgence est définie pour être plus haute que celle de la solution standard dans une définition de la priorité et qu'un item n'ayant pas de données de solution standard valides est présent parmi des items de mesure de l'échantillon d'urgence comme la condition de contrainte, de la solution standard correspondante avec une priorité au-dessus de l'échantillon d'urgence.

5. Analyseur automatique selon la revendication 1, comprenant en outre :
une unité (126a) d'affichage configurée pour afficher les informations stockées dans l'unité (127) de stockage,
dans lequel l'unité (128) de commande amène l'unité d'affichage à afficher un écran d'entrée sur lequel un opérateur définit la priorité.

6. Analyseur automatique selon la revendication 5,
dans lequel l'écran (301) d'entrée permet à l'opérateur d'entrer une quelconque priorité.

7. Analyseur automatique selon la revendication 5,
dans lequel, sur l'écran (301) d'entrée, une combinaison d'un couple prédéterminé de schémas de priorités est affichée, et un des schémas affichés est sélectionné.
